# EUROPEAN PATENT SPECIFICATION

(11) **EP 4 101 542 B1**
(45) Date of publication and mention of the grant of the patent: **21.08.2024**
(21) Application number: 22168644.7
(22) Date of filing: 15.04.2022
(51) Int. Cl.: B02C 19/00, B02C 18/06, B02C 18/22, B02C 23/00, B02C 13/26, C11B 1/06, A23N 1/02, C11B 1/04

(54) **THERMALLY CONDITIONED OLIVE CRUSHING SYSTEM**
THERMISCH KONDITIONIERTES SYSTEM ZUM ZERKLEINERN VON OLIVEN
SYSTÈME DE BROYAGE D'OLIVE THERMIQUEMENT CONDITIONNÉ

(30) Priority: 30.04.2021 IT 202100011048
(43) Date of publication of application: 14.12.2022
(73) Proprietor: PIERALISI MAIP SOCIETA' PER AZIONI, 60035 Jesi (AN) (IT)
(72) Inventor: PIERPAOLI, Martina, 60121 Ancona (IT); CEI, Stefano, 55049 Viareggio (LU) (IT)
(74) Representative: Baldi, Claudio

(56) References cited:
- EP-A2- 1 479 302
- WO-A1-2004/011580
- IT-B- 1 046 323

## Description

This patent application for industrial invention relates to a thermally conditioned olive crushing system.

The field of reference is the olive sector, that is to say the sector that provides for the processing of olives in order to produce oil.

As is known, the processing of olives for the production of oil is traditionally divided into four successive stages, which are called defoliation and washing, crushing, kneading and oil extraction.

Continuous cycle mills have been realized in order to perform a continuous processing of the olives, which comprise:
- a defoliation and washing system comprising machinery suitable for defoliating and washing the olives;
- a crushing system comprising a crusher suitable for breaking and crushing the olives in such a way to generate a puree, and a conveyor assembly that receives the puree from the crusher and conveys it to a collection point wherein the puree is taken by a pump and pumped forcefully to a kneader;
- a kneading system comprising said kneader which uses conduction/convention mechanisms in order to aggregate the oil droplets in such a way as to have larger and larger droplets which are easier to extract in a subsequent extraction step;
- an extraction system comprising an extractor configured in such a way as to receive the puree and definitively separate the oil from the waste material, which is commonly called pomace; said pomace can be recycled and used as fuel in biomass boilers or can be used to feed anaerobic fermentation processes for the production of gas.

In particular, the present invention relates to the crushing process of olives.

As it is known, the crushing process provides for crushing the olives in order to release the oil contained in the cells. Moreover, crushing activates the enzymatic components (lipoxygenase, glycosidase, lipolysis and polyphenol oxidase) which are responsible for the formation of the chemical and sensory characteristics of the oil.

A conventional crusher comprises:
- a crushing chamber wherein the olives are crushed in order to obtain the puree,
- crushing means disposed in the crushing chamber and suitable for crushing the olives in such a way as to generate the puree
- a feeding conduit that ends in the crushing chamber in such a way as to feed the chamber with the olives,
- an outlet suitable for discharging said puree.

Said conveyor assembly is disposed under the outlet in order to receive and convey the puree towards the collection point, where the puree is pumped towards the kneader.

The conveyor assembly comprises:
- a frame comprising a tubular element, which is disposed horizontally, and an inlet in communication with the outlet of the crusher in such a way that the puree discharged from the outlet flows in the tubular element; and
- a scroll disposed in the tubular element in a coaxial manner to the tubular element; the scroll is suitable for conveying the puree that is introduced in the tubular element towards the collection point disposed in proximity to one end of the tubular element.

IT1046323 describes a crushing system according to the preamble of claim 1.

EP1479302A2 describes a particular type of olive crusher.

WO2004/011580A1 describes an olive oil extraction plant operating at low temperatures.

The applicant noted that a crucial aspect that affects the quality and the characteristics of the final oil is the temperature at which the olives are crushed, and therefore the temperature at which the puree is fed to the kneading system.

During the crushing of the olives and the mechanical transportation of the puree, the puree is heated, impairing the effectiveness of the subsequent steps and therefore negatively affecting the quality of the final oil. In particular, the applicant found out that the higher the temperature of the puree coming out of the crushing system, the worse the quality and organoleptic properties of the final oil will be.

The purpose of the present invention is to devise a thermally conditioned olive crushing system that allows for adjusting the temperature of the puree, preferably cooling it, in such a way that said puree has an optimal temperature for the subsequent processing steps. Otherwise said, the purpose of the present invention is to devise a thermally conditioned crushing system capable of providing the puree at such a temperature to improve the quality of the final oil.

A further scope of the present invention is to devise a crushing system that is effective and simple to implement.

Another purpose is to devise an oil press comprising said thermally conditioned crushing system.

These purposes are achieved in accordance with the invention having the features listed in the appended independent claim 1.

Advantageous embodiments appear from the dependent claims.

The crushing system according to the invention is defined by claim 1.

For the sake of clarity, the description of the crushing system according to the invention is continued with reference to the appended drawings, which only have an illustrative and non-limiting value, wherein:
Fig. 1 is a schematic view of a continuous cycle oil press comprising the crushing system according to the invention;
Fig. 2 is a schematic view of the crushing system according to the invention equipped with a thermal conditioning system;
Fig. 3 is an axonometric view of the crusher and of the conveyor assembly of the crushing system according to the invention;
Figs. 4 and 4A are two axonometric views of the crusher of the crushing system seen from two different angles;
Fig. 5 is a front view of the crusher illustrating in detail the crushing chamber and the crushing means;
Fig. 5A is a sectional view of the crusher shown in Fig. 5 sectioned along the plane V-V;
Fig. 5B is an enlarged view of the detail enclosed in the circle O of Fig. 5A;
Fig. 6 is an axonometric view of the scroll of the conveyor assembly according to a first embodiment;
Fig. 6A is an axial sectional view of the scroll shown in Fig. 6;
Fig. 7 is an axonometric view of the scroll of the conveyor assembly according to a second embodiment;
Fig. 7A is an axial sectional view of the scroll shown in Fig. 7;
Figs. 8 and 8A are two axial sectional views of the scroll of the conveyor assembly, wherein the central shaft is hollow so that a conditioning fluid can flow inside it;
Fig. 9 is a top view of the frame of the conveyor assembly;
Fig. 9A is a side view of the frame of the conveyor assembly sectioned along the plane IX-IX of Fig. 9;
Fig. 10 is an exploded axonometric view of the frame of the conveyor assembly.

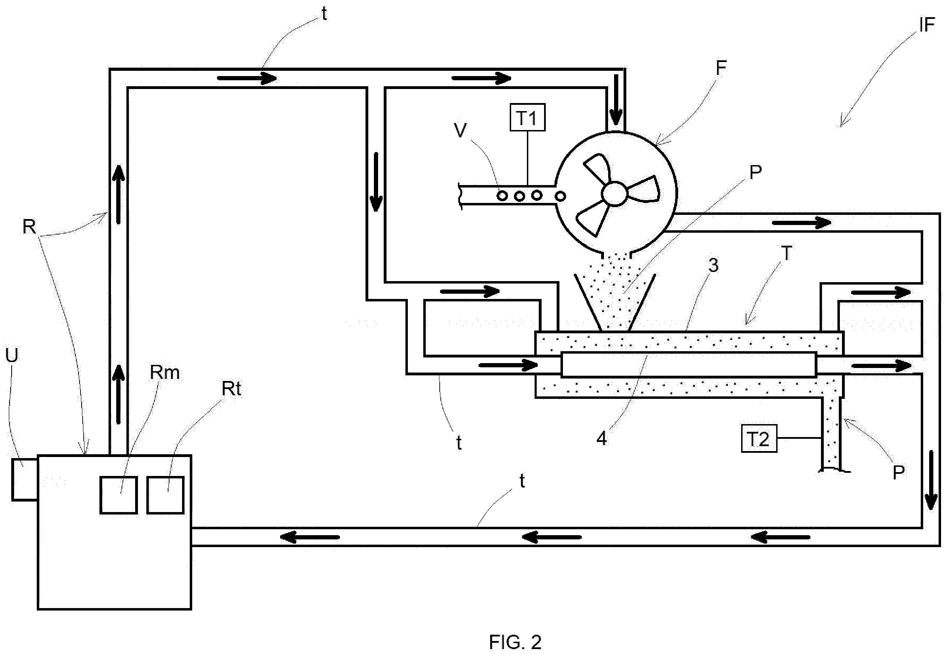

With reference to Figs. 2 to 10, a crushing system according to the invention, which is generally referred to as (IF), is described.

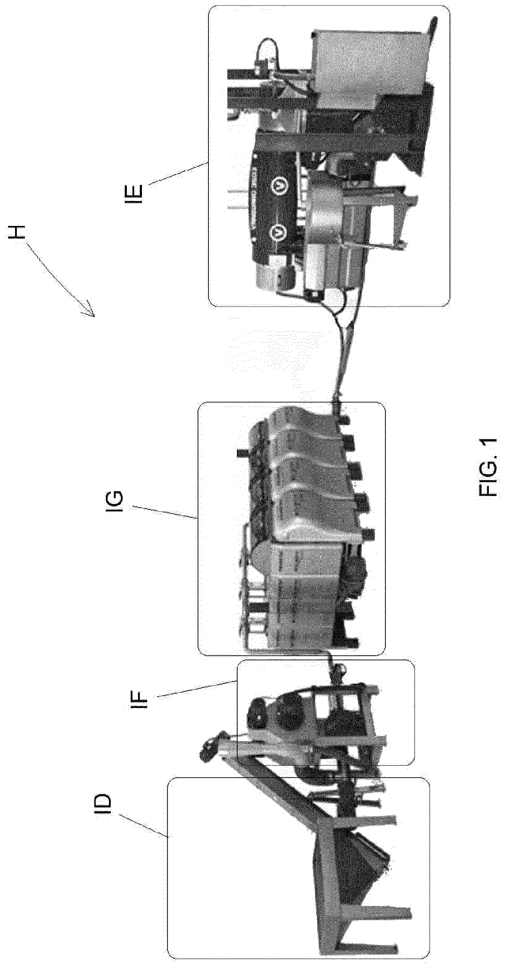

The crushing system (IF) is an integral part of an oil press (H), which is shown schematically in Fig. 1.

In particular, the oil press (H) comprises:
- a defoliation and washing system (ID) comprising machinery for defoliating and washing the olives (V);
- said crushing system (IF) suitable for crushing the olives (V) received from the defoliation and washing system (ID) in such a way as to obtain a puree (P);
- a kneading system (IG) comprising a kneader that uses conduction/convention mechanisms in order to aggregate the oil droplets contained in the puree (P) in such a way as to have increasingly larger droplets that are easier to extract in a subsequent extraction step;
- an extraction system (IE) comprising an extractor configured in such a way as to receive the puree from the kneading system and definitively separate the oil from the waste material, which is commonly defined as pomace.

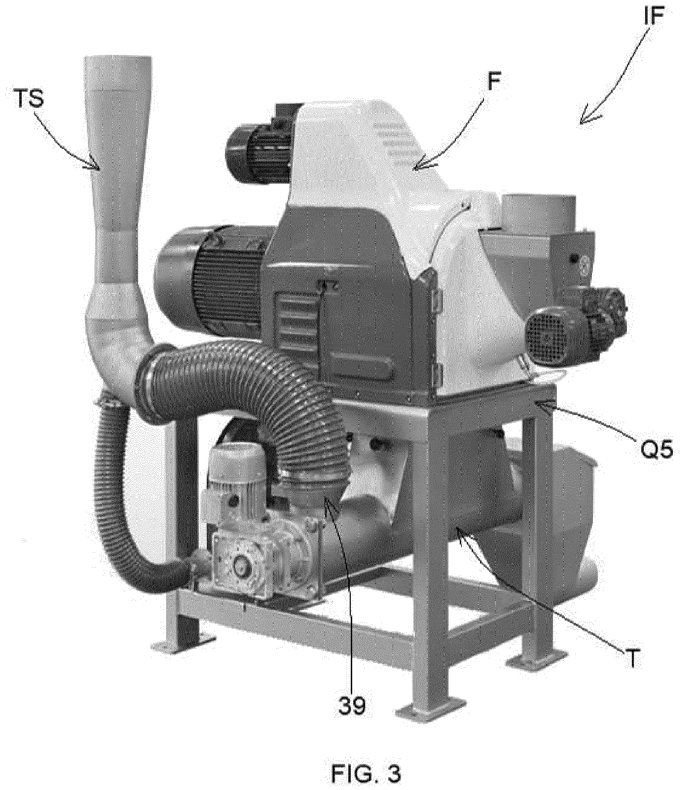

With reference to Figs. 2 and 3, the crushing system (IF) comprises a crusher (F) and a conveyor assembly (T) disposed downstream the crusher (F). The conveyor assembly (T) is preferably disposed under the crusher (F).

The crusher (F) is mounted on a supporting frame (QS), also referred to as a supporting bench.

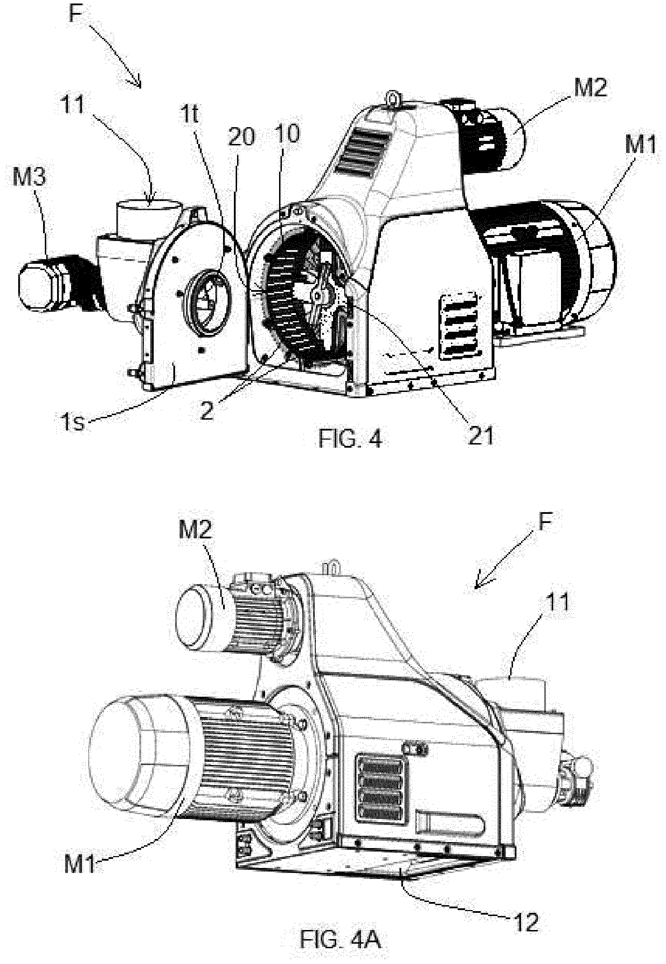

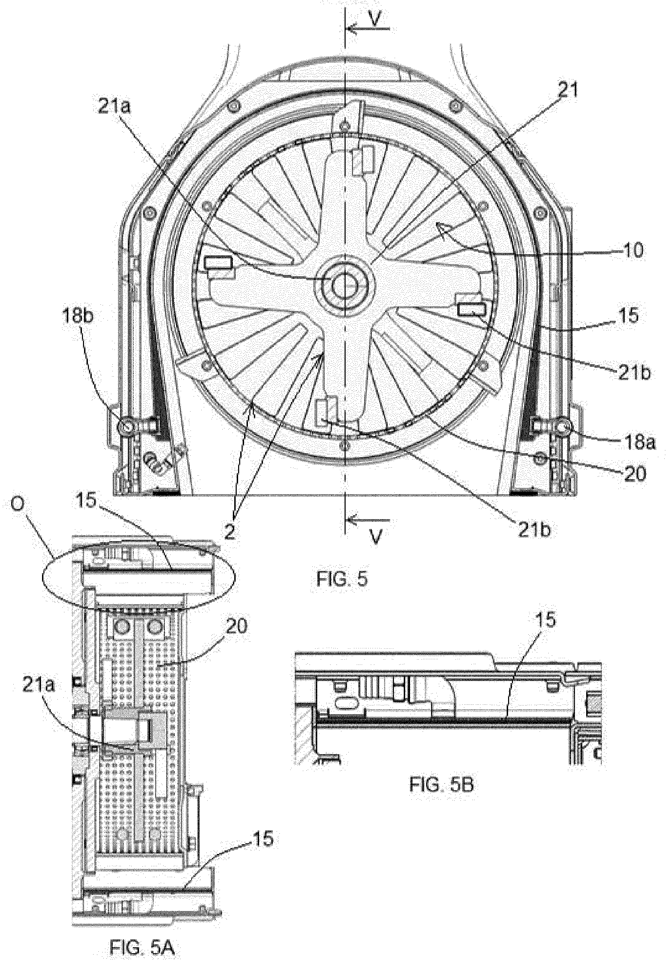

With reference to Figs. 4, 4A, 5, 5A and 5B, the crusher (F) comprises:
- a crushing chamber (10) where the olives (V) are crushed in order to obtain the puree (P);
- crushing means (2) disposed in the crushing chamber (10) and shaped in such a way as to crush said olives (V) in order to obtain said puree (P);
- a feeding conduit (11) that ends in the crushing chamber (10) in such a way as to feed the crushing chamber (10) with the olives (V);
- an outlet (12) which is disposed under the crushing chamber (10) and from which the puree (P) flows out by gravity.

The feeding conduit (11) is mounted on a door (1s) which is configured in such a way as to frontally close said crushing chamber (10).

A conveyor scroll (1t) is provided in the feeding conduit (11), which is suitable for pushing and conveying the olives (V) into the crushing chamber (10).

Said conveyor scroll (1t) is moved by means of handling means (M3). In particular, said handling means (M3) consist in an electric motor.

In the preferred embodiment of the invention, said crushing means (2) of the crusher (F) comprise:
- a grid (20) with a circular section housed in the crushing chamber (10);
- an impeller (21) disposed in the grid (20) and comprising a central hub (21a) and a plurality of hammers (21b) suitable for cooperating with the circular grid (20) in order to crush the olives (V) and generate the puree (P);
- rotation means (M1, M2) for said grid (20) and said impeller (21) which are configured in such a way as to rotate said grid (20) and said impeller (21) in opposite directions.

The rotation means (M1, M2) consist in electric motors connected by transmission means (not shown in the appended figures) to the impeller (21) and the grid (20).

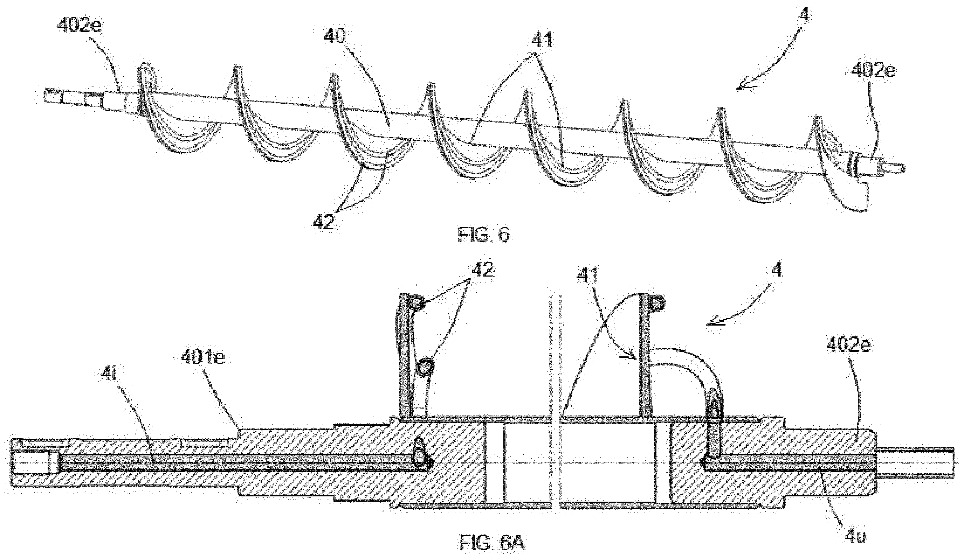

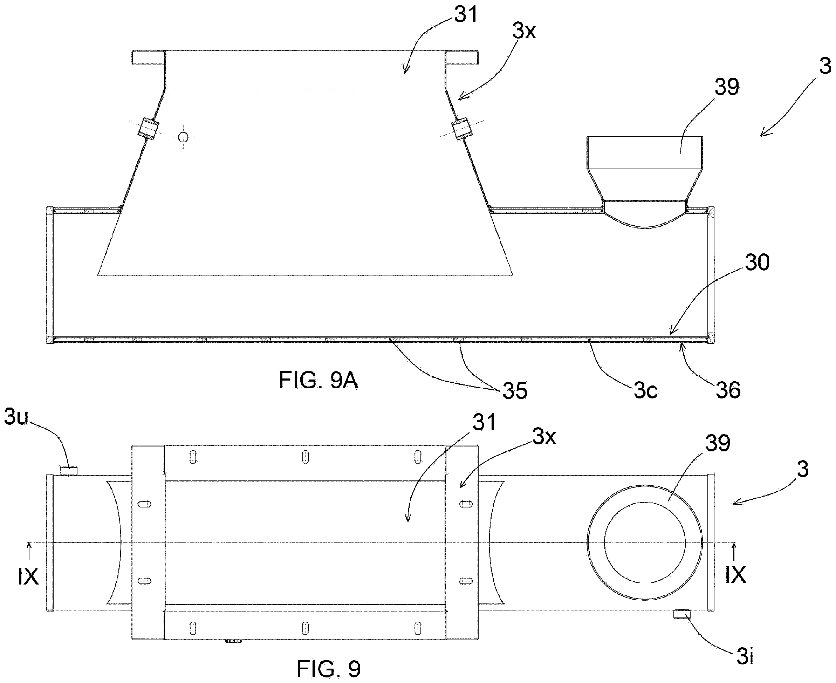

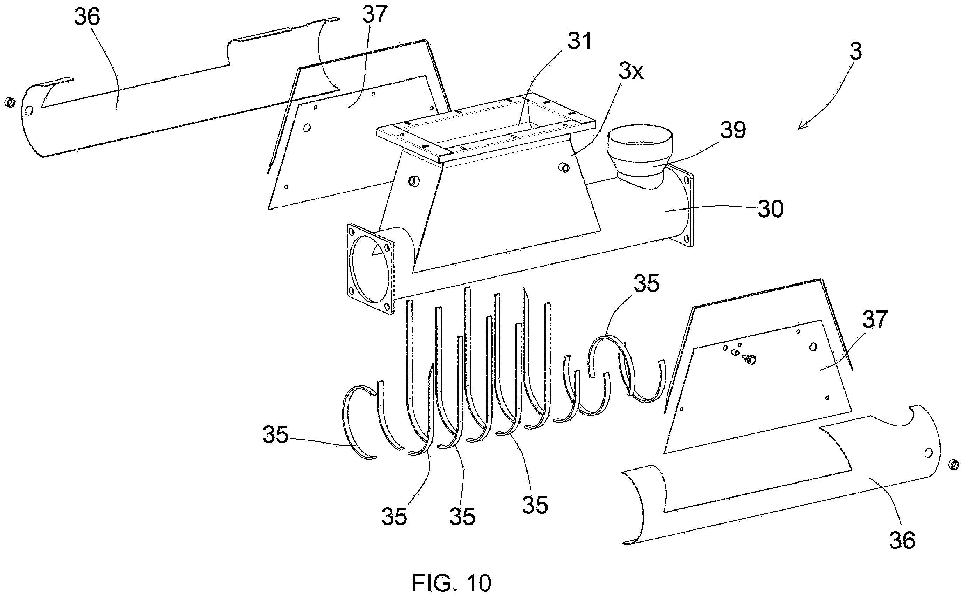

The conveyor assembly (T) comprises:
- a frame (3) (shown in Figs. 9, 9A and 10) comprising a tubular element (30) disposed in substantially horizontal position and an inlet (31) that ends in the tubular element (30) and communicates with the outlet (12) of the crusher (F) so that the puree flowing out of said outlet (12) flows in the tubular element (30); and
- a scroll (4) (shown in Figs. 6, 6A, 7, 7A, 8 and 8 A) disposed in the tubular element (30) in a coaxial manner to the tubular element (30); the scroll (4) is suitable for conveying the puree that is introduced in the tubular element (30) towards one end of the tubular element (30), where the puree is then directed towards said kneader by means of a pump.

The scroll (4) is rotated around its axis by means of handling devices not shown in the appended figures. Said handling means consist in a motor and transmission means that transfer the motion from the motor to the scroll (4).

The scroll (4) comprises a central shaft (40) and a helical blade (41) that extends for the entire length of the central shaft (40).

Preferably, said frame (3) comprises a hopper (3x) comprising said inlet (31). The hopper (3x) is mounted above the tubular element (30) and is configured in such a way as to be connected to the outlet (12) of the crusher (F) so as to realize a single conduit that puts the crushing chamber (10) of the crusher in direct communication with the interior of the tubular element (30) of the frame (3) of the conveyor assembly (T).

In the appended figures the connection of the hopper (3x) to the outlet (12) is made by means of a connection flange (31a), obtained at the top of the hopper (3x) whereon screws are applied to secure the hopper (3x) to the outlet (12).

Alternatively, said outlet (12) and said hopper (3x) may be connected to each other by means of a connection pipe connected to said outlet (12) on one side and to said hopper (3x) on the other side.

The frame (3) also comprises a fume exhaust chimney (39) from which the fumes generated during the crushing process are suitable for being discharged. Preferably, an exhaust pipe (TS), which is shown and indicated in Fig. 3, is connected to the fume exhaust chimney (39).

With reference to Fig. 2, the peculiarity of the crushing system (IF) according to the invention is the fact that is comprises a temperature conditioning system (R) comprising a water system wherein a conditioning liquid is suitable for flowing, and means (Rm) suitable for handling and for making the conditioning liquid flow in the water system.

Said temperature conditioning system (R) is configured to thermally condition the crushing system (IF).

Otherwise said, the temperature conditioning system (R) is configured in such a way as to thermally condition the temperature of the crushing chamber (10) and/or the frame (3) and/or the scroll (4) so that said crushing system (IF) provides the subsequent processing systems with a puree at a preset temperature.

The water system comprises pipes (t) wherein the conditioning liquid is suitable for flowing, whereas said means (Rm) comprise a hydraulic pump suitable for moving the liquid in the water system.

Preferably, the water system further comprises temperature control means (Rt) configured in such a way to adjust the temperature of the conditioning liquid.

Preferably, said temperature conditioning system (R) is a cooling system and therefore the conditioning liquid is a coolant. However, the temperature of the coolant can always be adjusted by means of said temperature control means (Rt).

The temperature at which the conditioning liquid is made to flow towards the crushing chamber (10), the frame (3), and the scroll (4) depends in particular on the ambient temperature at which the crushing system (IF) operates and on the temperature of the olives.

Otherwise said, the higher the temperature of the olives or the ambient temperature at which the crushing system (IF) operates, the lower the temperature of the conditioning liquid will be.

Preferably, machines or thermal conditioning stations may be provided upstream said crushing system (IF), that is to say in correspondence with the defoliation or washing system (ID), to adjust the temperature of the olives (preferably by cooling them) before they reach the crushing system.

Still with reference to Fig. 2, this crushing system (IF) also comprises:
- a first temperature sensor (T1) configured in such a way as to detect a temperature of the olives (V) that feed the crusher (F); and
- a second temperature sensor (T2) configured in such a way as to detect a temperature of the puree (P) discharged from the conveyor assembly (T); and
- a control unit (U) operatively connected to the temperature sensors (T1, T2) to receive the detected temperatures from the temperature sensors (T1, T2) and manage the conditioning liquid based on said those temperatures.

Otherwise said, the control unit (U) is operatively connected to the temperature control means (Rm) in order to set the temperature of the conditioning liquid according to the temperatures detected by the temperature sensors (T1, T2).

Preferably, the control unit (U) is configured in such a way as to adjust the temperature of the liquid so as to have a constant temperature of the puree (P) discharged from the conveyor assembly (T) comprised between 18°C and 22°C.

In fact, the applicant discovered that with such temperatures of the puree (P) there is an improvement in the phenolic and aromatic characteristics and a significant increase in the compounds responsible for the sensory notes of freshness and herbaceous features of the final oil.

With reference to Figures 5 to 10, the present description continues with a detailed illustration of the way in which the crushing chamber (10), the frame (3) and the scroll (4) are thermally conditioned, or better said, the way in which they are cooled.

In particular, with reference to Fig. 5, 5A and 5B, the crusher (F) comprises an empty space (15) formed at least partially around the crushing chamber (10). The empty space (15) of the crusher (F) is in fluid communication with the water system of the conditioning system such that the conditioning fluid flows in the empty space (15).

By passing in the vicinity of the crushing chamber (10), the conditioning liquid absorbs the heat of the crushing chamber (10) and consequently reduces the temperature in the crushing chamber (10).

Said empty space (15) is hydraulically connected to the water system by means of an inlet coupling (18a) and an outlet coupling (18b) whereto the hoses (t) of the water system are connected.

Figs. 6, 6A, 7, 7A, 8 and 8A show the way in which the scroll (4) is thermally conditioned, or better said, the way in which the scroll (4) is cooled.

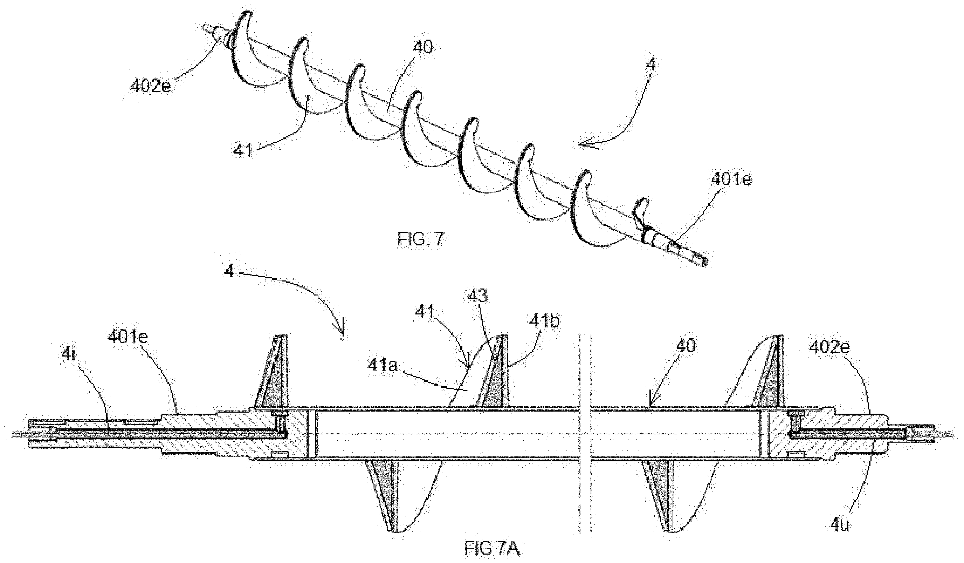

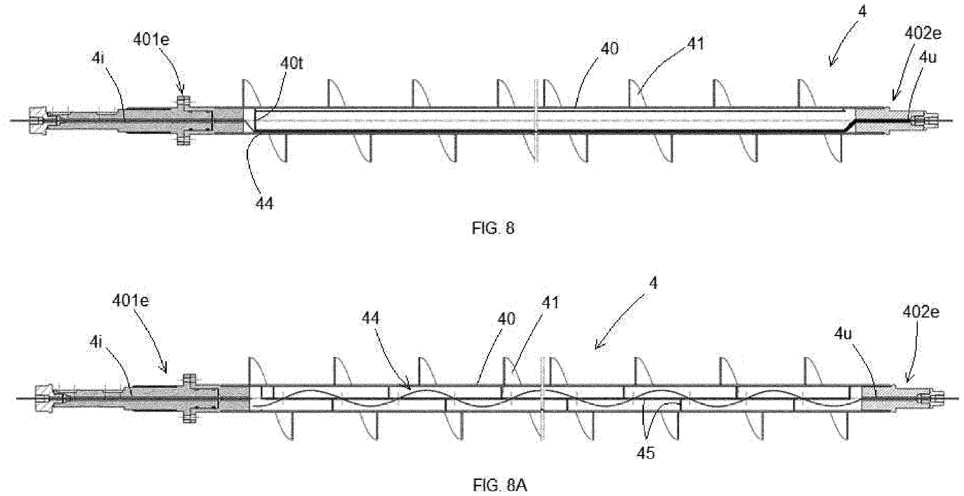

With reference to Figs. 6, 6A, 7, and 7A, two different versions of the thermal conditioning of the helical blade (41) are shown, whereas Figs. 8 and 8A show two thermal conditioning modes of the central shaft (40).

With reference to Figs. 6 and 6A, the thermal conditioning of the helical blade (41) is obtained by means of two pipes (42) welded on one face of the helical blade (41), which are in fluid communication with the water system so that the conditioning fluid flows inside the pipes (42). It should be noted that, although Figs. 6 and 6A show two pipes (42) that extend side by side along the helical blade (41), in an alternative embodiment of the invention a single pipe (42) may be provided.

With reference to Figs. 7 and 7A, the thermal conditioning of the helical blade (41) is obtained by means of an empty space (43) which is formed inside the helical blade (41) and is in fluid communication with the water system so that the conditioning fluid flows in the empty space (43).

Preferably, the empty space (43) is obtained by means of a first and a second portion (41a, 41b) of the helical blade (41) that extend for a same trajectory and are welded together in such a way as to define said empty space (43).

The version shown in Figs. 6 and 6A and the version shown in Figs. 7 and 7A are shown as alternatives to each other, but there is nothing to prevent them from being combined, thus obtaining an embodiment in which both the pipes (42) and the empty space (43) are simultaneously obtained on the helical blade (41).

Going to Figs. 8 and 8A, two different ways of cooling the central shaft (40) are shown.

In Fig. 8 and Fig. 8A, the central shaft (40) comprises an internal conduit (44) in fluid connection with the water system in such a way that the conditioning fluid flows in the internal conduit (44).

In the embodiment shown in Fig. 8, a pipe (40t) is disposed inside the central shaft (40) in coaxial position relative to the central shaft (40). The internal conduit (44) is internally defined by the pipe (40t) and is externally defined by the central shaft (40).

In the embodiment shown in Fig. 8A, the internal conduit (44) consists of an axial cavity formed along the entire central shaft. Means (45), which are configured in such a way as to impose a winding trajectory on the liquid, are provided in the axial cavity.

By way of example, said means (45) comprise a structure that extends for the entire length of the internal conduit (44) and comprises perforated walls defining said winding trajectory of the liquid. Fig. 8A schematically shows the trajectory of the liquid in the internal conduit (44) by means of a line that follows a sinusoidal pattern.

The pipes (42), or the empty space (43), or the internal conduit (44) are hydraulically connected to the water system by means of an inlet conduit (4i) and an outlet conduit (4u) of the central shaft (40). The inlet conduit (4i) and the outlet conduit (4u) are formed on opposite ends (401e, 402e) of the central shaft (40).

Referring to Figs. 9A and 9B, the frame (3) comprises a cover (36, 37) which covers said tubular element (30) completely and said hopper (3x) laterally.

The frame (3) further comprises a cavity (3c) defined internally by the tubular frame (30) and by the hopper (3x) and defined externally by said cover (36, 37).

The cover (36, 37) comprises two semi-cylindrical casings (36) covering the tubular member (30) and two panels (37) covering two side walls of the hopper (3x).

The cavity (3c) is in fluid communication with said water system so that conditioning fluid flows in the cavity.

The cavity (3c) is in fluid communication with the water system by means of an inlet coupling (3i) and an outlet coupling (3u) installed on the semi-cylindrical casings (36) to which the hoses (t) of the water system are to be connected.

The inlet coupling (3i) and the outlet coupling (3u) are disposed on two opposite ends of the tubular element (30) and in diametrically opposite positions with respect to the central axis of the tubular element (30).

Still with reference to Figs. 9A and 9B, the frame (3) comprises a plurality of partitions (35) disposed in the cavity (3c) and configured in such a way as to impose a winding trajectory on the liquid in the cavity (3c) so that the liquid homogeneously cools the hopper (3x) and the tubular element (30).

By means of experimental tests the applicant verified that the use of the crushing system (IF) according to the invention favors the enzymatic reactions that occur during the crushing of the olives, thus improving the quality and the organoleptic properties of the final oil.

In addition, experimental tests showed that the thermal conditioning (cooling) of the puree improves the quality of the final oil without affecting its yield.

In view of the above it is easy to understand how such a crushing system (IF) can play a fundamental role in the olive sector and can replace the current crushing systems installed in continuous cycle oil presses.

Numerous variations and detailed modifications can be made to the present embodiment of the invention, within the reach of a technician in the field, and within the scope of the invention as expressed by the appended claims.

## Claims

1. Crushing system (IF) for olives (V) comprising a crusher (F) and a conveyor assembly (T) disposed downstream the crusher (F); wherein said crusher (F) comprises:
- a crushing chamber (10) wherein the olives (V) are crushed until a puree (P) is obtained;
- crushing means (2) disposed in the crushing chamber (10) and suitably configured to crush said olives (V) in order to obtain said puree (P);
- a feeding conduit (11) that ends in the crushing chamber (10) in such a way to feed the crushing chamber (10) with the olives (V);
- an outlet (12) to discharge the puree (P) crushed in the crushing chamber (10);
wherein said conveyor assembly (T) comprises:
- a frame (3) comprising a tubular element (30) and an inlet (31) that ends in the tubular element (30) and is in communication with the outlet (12) of the crusher (F) in such a way that the puree discharged from the outlet (12) flows in the tubular element (30);
- a scroll (4) disposed in the tubular element (30); said scroll (4) being suitable for conveying the puree introduced in the tubular element (30) towards an end of the tubular element (30);
**characterized in that** it comprises a temperature conditioning system (R) comprising a water system wherein a conditioning liquid flows; said temperature conditioning system (R) being suitably configured to thermally condition the crushing system (IF).

2. The crushing system (IF) of claim 1, wherein said temperature conditioning system (R) is a cooling system and said conditioning liquid is a coolant.

3. The crushing system (IF) of claim 1 or 2, wherein said scroll (4) comprises a central shaft (40) and a helical blade (41) that extends for the entire length of the central shaft (40).

4. The crushing system (IF) of claim 3, wherein said scroll (4) comprises at least one pipe (42) welded on a side of the helical blade (41); said at least one pipe (42) being in fluid communication with said water system in such a way that said conditioning liquid flows in said at least one pipe (42).

5. The crushing system (IF) of claim 3 or 4, wherein said scroll (4) comprises an empty space (43) provided inside the helical blade (41); said empty space (43) being in fluid communication with said water system in such a way that the conditioning liquid flows in the empty space.

6. The crushing system (IF) of claim 5, wherein said helical blade (41) comprises a first portion (41a) and a second portion (41b) that extend along the same trajectory and are suitably welded to define said empty space (43).

7. The crushing system (IF) according to any one of claims 3 to 6, wherein said central shaft (40) comprises an internal conduit (44) in fluid communication with said water system in such a way that the conditioning liquid flows in the internal conduit (44).

8. The crushing system (IF) of claim 7, comprising means (45) disposed inside the internal conduit (44) and suitably configured to impose a winding trajectory on the conditioning liquid.

9. The crushing system (IF) according to any one of the preceding claims, wherein said frame (3) comprise a hopper (3x) comprising said inlet (31); said hopper (3x) being connected to the outlet (12) of the crusher (F) in such a way to realize a conduit that provides a direct communication between the crushing chamber (10) of the crusher (F) and the interior of the tubular element (30) of the frame (3) of the conveyor assembly (T).

10. The crushing system (IF) according to any one of the preceding claims, wherein said frame (3) comprises a cover (36) that covers said tubular element (30), at least partially; said frame (3) comprising an empty space (35) internally defined by the tubular frame (30) and externally defined by the cover (36); said empty space (35) being in fluid communication with said water system in such a way that the conditioning liquid flows in the empty space (35).

11. The crushing system (IF) of claim 10, wherein said frame (3) comprises partitions (35) disposed in the cavity (3c) and suitably configured to impose a winding trajectory on the liquid in the cavity (3c).

12. The crushing system (IF) according to any one of the preceding claims, wherein said crusher (F) comprises an empty space (15) that is at least partially obtained around the crushing chamber (10); said empty space (15) being in fluid communication with said water system in such a way that the conditioning liquid flows in said empty space (15).

13. The crushing system (IF) according to any one of the preceding claims, wherein said crushing means (2) of the crusher (F) comprise:
- a grid (20) with circular section that is housed in the crushing chamber (10);
- an impeller (21) disposed inside the grid (20), comprising a central hub (21a) and a plurality of hammers (21b) suitable for cooperating with the grid (20) in order to crush the olives (V) and generate the puree (P);
- rotation means (M1, M2) for said grid (20) and said impeller (21) that are suitably configured to rotate said grid (20) and said impeller (21) in opposite directions.

14. The crushing system (IF) according to any one of the preceding claims, comprising at least one temperature sensor (T1, T2) suitably configured to detect a temperature of the olives (V) that are fed in the crusher (F) and/or a temperature of the puree (P) generated in the crushing system and/or a temperature of the puree (P) discharged from the conveyor assembly (T); wherein said crushing system (IF) comprises an electronic control unit (U) operatively connected to said at least one temperature sensor (T1, T2) to receive the detected temperature value from said at least one temperature sensor (T1, T2); said electronic control unit (U) being suitably configured to control the conditioning system (R) in order to adjust the temperature of the conditioning liquid according to the detected temperature value.

15. Oil press (H) comprising:
- a defoliation and washing system (ID) comprising machines suitable for removing the leaves of the olives (V);
- a crushing system (IF) according to any one of the preceding claims;
- a kneading system (IG) comprising a kneader that uses conduction/convection mechanisms to aggregate oil drops contained in the puree (P);
- an extraction system (IE) comprising an extractor suitably configured to receive the paste from the kneading system (IG) and separate the oil from the waste material.

## Patentansprüche

1. Quetschanlage (IF) für Oliven (V), umfassend ein Quetschwerk (F) und eine Förderanordnung (T), die stromabwärts des Quetschwerks (F) angeordnet ist, wobei das Quetschwerk (F) umfasst:
- eine Quetschkammer (10), in der die Oliven (V) gequetscht werden, bis ein Mus (P) erhalten wird;
- Quetschmittel (2), die in der Quetschkammer (10) angeordnet sind und so ausgebildet sind, dass sie die Oliven (V) quetschen, um das Mus (P) zu erhalten;
- eine Zuführlinie (11), die in die Quetschkammer (10) mündet, so dass die Quetschkammer (10) mit den Oliven (V) gespeist wird;
- eine Auslassmündung (12), aus der das in der Quetschkammer (10) gequetschte Mus (P) ausgelassen wird;
wobei die Förderanordnung (T) umfasst:
- ein Gestell (3), umfassend ein rohrförmiges Element (30) und eine Einlassmündung (31), die ins Innere des rohrförmigen Elements (30) mündet und die Einlassmündung (31) steht mit der Auslassmündung (12) des Quetschwerks (F) in Verbindung, so dass das Mus, das aus der Auslassmündung (12) austritt, in das Innere des rohrförmigen Elements (30) fließt;
- eine Schnecke (4), die im Inneren des rohrförmigen Elements (30) angeordnet ist; wobei die Schnecke (4) geeignet ist, das in das rohrförmige Element (30) eingeführte Mus zu einem Ende des rohrförmigen Elements (30) hin zu fördern;
**dadurch gekennzeichnet, dass** sie ein Temperaturregelungssystem (R) umfasst, umfassend ein Wassersystem, in dem eine Konditionierflüssigkeit fließt; wobei das Temperaturregelungssystem (R) so konfiguriert ist, dass es die Anlage zum Quetschen (IF) thermisch konditioniert.

2. Quetschanlage (IF) nach Anspruch 1, wobei das Temperaturregelungssystem (R) ein Kühlsystem ist und die Konditionierflüssigkeit eine Kühlflüssigkeit ist.

3. Quetschanlage (IF) nach Anspruch 1 oder 2, wobei die Schnecke (4) eine Zentralwelle (40) und eine Schneckenschaufel (41) umfasst, die sich über die gesamte Länge des Zentralwelle (40) erstreckt.

4. Quetschanlage (IF) nach Anspruch 3, wobei die Schnecke (4) mindestens ein Rohr (42) umfasst, das auf einer Seite der Schneckenschaufel (41) angeschweißt ist; wobei das mindestens eine Rohr (42) in fluidischer Verbindung mit dem Wassersystem steht, so dass im Innern des mindestens einen Rohrs (42) die Konditionierflüssigkeit fließt.

5. Quetschanlage (IF) nach Anspruch 3 oder 4, wobei die Schnecke (4) einen Zwischenraum (43) umfasst, der im Innern der Schneckenschaufel (41) herausgearbeitet ist; wobei der Zwischenraum (43) in fluidischer Verbindung mit dem Wassersystem steht, so dass im Inneren des Zwischenraums die Konditionierflüssigkeit fließt.

6. Quetschanlage (IF) nach Anspruch 5, wobei die Schneckenschaufel (41) einen ersten Abschnitt (41a) und einen zweiten Abschnitt (41b) umfasst, die sich über eine gleiche Bahn erstrecken und miteinander verschweißt sind, so dass sie zwischen sich den Zwischenraum (43) definieren.

7. Quetschanlage (IF) nach einem der Ansprüche 3 bis 6, wobei die Zentralwelle (40) eine interne Leitung (44) umfasst, die in fluidischer Verbindung mit dem Wassersystem steht, so dass in der internen Leitung (44) die Konditionierflüssigkeit fließt.

8. Quetschanlage (IF) nach Anspruch 7, umfassend Mittel (45), die im Inneren der internen Leitung (44) angeordnet und so ausgebildet sind, dass sie der Konditionierflüssigkeit einen gewundenen Weg auferlegen.

9. Quetschanlage (IF) nach einem der vorstehenden Ansprüche, wobei das Gestell (3) einen Trichter (3x) umfasst, der die Einlassmündung (31) umfasst; wobei der Trichter (3x) mit der Auslassmündung (12) des Quetschwerks (F) verbunden ist, so dass eine Leitung hergestellt wird, die die Quetschkammer (10) des Quetschwerks (F) mit dem Inneren des rohrförmigen Elements (30) des Gestells (3) der Förderanordnung (T) in Verbindung bringt.

10. Quetschanlage (IF) nach einem der vorstehenden Ansprüche, wobei das Gestell (3) einen Deckel (36) umfasst, der das rohrförmige Element (30) mindestens teilweise bedeckt; wobei das Gestell (3) einen Zwischenraum (35) umfasst, der innen durch das rohrförmige Gestell (30) und außen durch den Deckel (36) definiert ist; wobei der Zwischenraum (35) in fluidischer Verbindung mit dem Wassersystem steht, so dass in dem Zwischenraum (35) die Konditionierflüssigkeit fließt.

11. Quetschanlage (IF) nach Anspruch 10, wobei das Gestell (3) Zwischenwände (35) umfasst, die im Innern des Zwischenraums (3c) angeordnet sind und so ausgebildet sind, dass sie der Flüssigkeit in dem Zwischenraum (3c) einen gewundenen Weg auferlegen.

12. Quetschanlage (IF) nach einem der vorstehenden Ansprüche, wobei das Quetschwerk (F) einen Zwischenraum (15) umfasst, der mindestens teilweise um die Quetschkammer (10) herum herausgearbeitet ist; wobei der Zwischenraum (15) in fluidischer Verbindung mit dem Wassersystem steht, so dass in dem Zwischenraum (15) die Konditionierflüssigkeit fließt.

13. Quetschanlage (IF) nach einem der vorstehenden Ansprüche, wobei die Quetschmittel (2) des Quetschwerks (F) umfassen:
- ein Gitter (20) mit kreisförmigem Querschnitt, das im Innern der Quetschkammer (10) untergebracht ist;
- ein Laufrad (21), das im Innern des Gitters (20) angeordnet ist und eine mittlere Nabe (21a) und eine Vielzahl von Hämmern (21b) umfasst, die geeignet sind, mit dem Gitter (20) zusammenzuwirken, um die Oliven (V) zu quetschen und das Mus (P) zu erzeugen;
- Drehmittel (M1, M2) für das Gitter (20) und das Laufrad (21), die so ausgebildet sind, dass sie das Gitter (20) und das Laufrad (21) in zueinander entgegengesetzte Richtungen in Drehung versetzen.

14. Quetschanlage (IF) nach einem der vorstehenden Ansprüche, umfassend mindestens einen Temperatursensor (T1, T2), der so konfiguriert ist, dass er eine Temperatur der Oliven (V) erfasst, die in das Quetschwerk (F) eingespeist werden und/oder eine Temperatur des Muses (P), das in der Quetschanlage erzeugt wird und/oder eine Temperatur des Muses (P), das aus der Förderanordnung (T) austritt; wobei die Quetschanlage (IF) eine Steuereinheit (U) umfasst, die mit dem mindestens einen Temperatursensor (T1, T2) wirkverbunden ist, um von dem mindestens einen Temperatursensor (T1, T2) die erfasste Temperatur zu empfangen; wobei die Steuereinheit (U) so konfiguriert ist, dass sie die Temperaturregelungsanlage (R) steuert, um die Temperatur der Konditionierflüssigkeit auf der Grundlage der erfassten Temperatur zu regeln.

15. Ölmühle (H), umfassend:
- eine Entblätterungs- und Waschanlage (ID), umfassend Maschinen, die geeignet sind, die Oliven (V) von Blättern zu befreien;
- eine Quetschanlage (IF) nach einem der vorstehenden Ansprüche;
- eine Knetanlage (IG), umfassend einen Kneter, der die Leitungs- und Konvektionsmechanismen nutzt, um die in dem Mus (P) vorhandenen Öltropfen zu aggregieren;
- eine Extraktionsanlage (IE), umfassend einen Extraktor, der so ausgebildet ist, dass er die Paste aus der Knetanlage (IG) aufnimmt und das Öl von dem Ausschussmaterial trennt.

## Revendications

1. Système de pressage (IF) pour olives (V) comprenant un broyeur (F) et un groupe de transport (T) disposé en aval du broyeur (F) ; où ledit broyeur (F) comprend :
- une chambre de broyage (10) où les olives (V) sont broyées aux fins d'obtenir une pâte (P) ;
- des moyens de broyage (2) disposés à l'intérieur de la chambre de broyage (10) et configurés de manière à broyer lesdites olives (V) aux fins d'obtenir ladite pâte (P) ;
- une conduite d'alimentation (11) qui débouche à l'intérieur de la chambre de broyage (10) de manière à alimenter la chambre de broyage (10) avec des olives (V) ;
- une bouche (12) pour décharger la pâte (P) broyée dans la chambre de broyage (10) ;
où ledit groupe de transport (T) comprend :
- un châssis (3) comprenant un élément tubulaire (30) et une embouchure d'entrée (31) qui débouche à l'intérieur de l'élément tubulaire (30) et ladite embouchure d'entrée (31) est en communication avec la bouche de décharge (12) du broyeur (F) de façon que la pâte qui sort de la bouche de décharge (12) s'écoule à l'intérieur de l'élément tubulaire (30) ;
- une vis sans fin (4) disposée à l'intérieur de l'élément tubulaire (30) ; ladite vis sans fin (4) étant apte à transporter la pâte en entrée dans l'élément tubulaire (30) vers une extrémité de l'élément tubulaire (30) ;
**caractérisé en ce qu'**il comprend un système de climatisation de la température (R) comprenant un réseau d'alimentation en eau à l'intérieur duquel est destiné à s'écouler un liquide de climatisation ; ledit système de climatisation de la température (R) étant configuré de manière à climatiser thermiquement le système de pressage (IF).

2. Système de pressage (IF) selon la revendication 1, où ledit système de climatisation de la température (R) est un système de refroidissement et ledit liquide de climatisation est un liquide réfrigérant.

3. Système de pressage (IF) selon la revendication 1 ou 2, où ladite vis sans fin (4) comprend un arbre central (40) et une lame hélicoïdale (41) qui se déploie sur toute la longueur de l'arbre central (40).

4. Système de pressage (IF) selon la revendication 3, où ladite vis sans fin (4) comprend au moins un tube (42) soudé sur une face de la lame hélicoïdale (41) ; ledit au moins un tube (42) étant en communication de liquide avec ledit réseau d'alimentation en eau, de sorte que ledit liquide de climatisation s'écoule à l'intérieur du susdit au moins un tube (42).

5. Système de pressage (IF) selon la revendication 3 ou 4, où ladite vis sans fin (4) comprend un espace vide (43) réalisé à l'intérieur de la lame hélicoïdale (41) ; ledit espace vide (43) étant en communication de liquide avec ledit réseau d'alimentation en eau, de sorte que le liquide de climatisation s'écoule à l'intérieur de l'espace vide.

6. Système de pressage (IF) selon la revendication 5, où ladite lame hélicoïdale (41) comprend un premier segment (41a) et un second segment (41b) qui se déploient le long d'une même trajectoire et qui sont soudés entre eux de manière à définir entre eux ledit espace vide (43).

7. Système de pressage (IF) selon l'une quelconque des revendications de 3 à 6, où ledit arbre central (40) comprend une conduite interne (44) en communication de liquide avec ledit réseau d'alimentation en eau, de sorte que le liquide de climatisation s'écoule dans la conduite interne (44).

8. Système de pressage (IF) selon la revendication 7, comprenant des moyens (45) disposés à l'intérieur de la conduite interne (44) et configurés de manière à imposer un trajet tortueux au liquide de climatisation.

9. Système de pressage (IF) selon l'une quelconque des revendications précédentes, où ledit châssis (3) comprend une trémie (3x) comprenant la susdite embouchure d'entrée (31) ; ladite trémie (3x) étant reliée à la bouche de décharge (12) du broyeur (F) de façon à réaliser une conduite qui met en communication directe la chambre de broyage (10) du broyeur (F) et l'intérieur de l'élément tubulaire (30) du châssis (3) du groupe de transport (T).

10. Système de pressage (IF) selon l'une quelconque des revendications précédentes, où ledit châssis (3) comprend un couvercle (36) qui recouvre au moins partiellement ledit élément tubulaire (30) ; ledit châssis (3) comprenant un espace vide (35) défini intérieurement par le châssis tubulaire (30) et extérieurement par le couvercle (36) ; ledit espace vide (35) étant en communication de liquide avec ledit réseau d'alimentation en eau, de sorte que le liquide de climatisation s'écoule dans l'espace vide (35).

11. Système de pressage (IF) selon la revendication 10, où ledit châssis (3) comprend des séparations (35) disposées à l'intérieur de la cavité (3c) et conformées de manière à imposer un trajet tortueux au liquide dans l'espace vide.

12. Système de pressage (IF) selon l'une quelconque des revendications précédentes, où ledit broyeur (F) comprend un espace vide (15) réalisé au moins partiellement autour de la chambre de broyage (10) ; ledit espace vide (15) étant en communication de liquide avec ledit réseau d'alimentation en eau, de sorte que le liquide de climatisation s'écoule dans l'espace vide (15).

13. Système de pressage (IF) selon l'une quelconque des revendications précédentes, où lesdits moyens de broyage (2) du broyeur (F) comprennent :
- une grille (20) à section circulaire logée à l'intérieur de la chambre de broyage (10) ;
- un rotor (21), disposé à l'intérieur de la grille (20), comprenant un moyeu central (21a) et une pluralité de marteaux (21b) aptes à coopérer avec la grille (20) afin de broyer les olives (V) et obtenir la pâte (P) ;
- des moyens de rotation (M1, M2) pour ladite grille (20) et ledit rotor (21), moyens configurés de manière à faire tourner ladite grille (20) et ledit rotor (21) en directions opposées entre elles.

14. Système de pressage (IF) selon l'une quelconque des revendications précédentes, comprenant au moins un capteur de température (T1, T2) configuré de manière à relever une température des olives (V) qui alimentent le broyeur (F) et/ou une température de la pâte (P) générée dans le système de pressage et/ou une température de la pâte (P) en sortie du groupe de transport (T) ; où ledit système de pressage (IF) comprend une unité de commande (U) reliée opérationnellement au susdit au moins un capteur de température (T1, T2) pour recevoir du susdit capteur (T1, T2) la température relevée ; ladite unité de commande (U) étant configurée de manière à gérer le système de climatisation (R) aux fins de régler la température du liquide de climatisation en fonction de la température relevée.

15. Moulin à huile (H) comprenant :
- un système de défeuillage et de lavage (ID) comprenant des machines aptes à défeuiller les olives (V) ;
- un système de pressage (IF) selon l'une quelconque des revendications précédentes ;
- un système de malaxage (IG) comprenant un malaxeur qui exploite des mécanismes de conduction/convection aux fins d'agréger les gouttelettes d'huiles présentes dans la pâte (P) ;
- un système d'extraction (IE) comprenant un extracteur configuré de manière à recevoir la pâte depuis le système de malaxage (IG) et séparer l'huile des matières résiduelles.
